# EUROPEAN PATENT APPLICATION

(11) **EP 4 763 906 A1**
(43) Date of publication of application: **24.06.2026**
(21) Application number: 25225576.5
(22) Date of filing: 19.12.2025
(51) Int. Cl.: C08K 5/50, C08K 7/14, C08K 5/3492, C08K 5/5313, C08L 77/02

(54) **IONIC LIQUIDS AS FLAME-RETARDANT SYNERGISTS FOR POLYAMIDE POLYMERS**

(30) Priority: 20.12.2024 US 202418989042
(71) Applicant: Inovia Materials (Hangzhou) Co. Ltd, 311215 Hangzhou ZJ (CN)
(72) Inventor: XU, Jeff, Greenwood Village, CO 80111 (US)
(74) Representative: Abel & Imray LLP

(57) **Abstract**

The present disclosure provides a flame retardant or flame resistant material including a nylon (polyamide) polymer and an ionic liquid compound, wherein the ionic liquid compound improves the flame resistance of the material. The flame retardant or flame resistance materials exhibit desirable mechanical properties. In some aspects, the disclosed flame retardant or flame resistant materials can also include additional known flame retardant compounds such as, for example, those based on nitrogen or phosphorus. In some aspects, the flame retardant or flame resistant material includes a glass fiber filler.

## Description

### FIELD OF INVENTION

The present disclosure is broadly directed to novel flame or fire retardant compounds and compositions for polyamides, the flame or fire retardant compounds and compositions including ionic liquids.

### BACKGROUND

Flame retardants are chemical additives that can be used across a variety of consumer products, such as plastics, textiles, leather, paper, rubber, etc. Chemicals frequently used as flame retardants can be mineral, halogen containing, nitrogen containing and phosphorus containing chemicals, silicon based chemicals, and so forth. The term "retardant" represents a class of use rather than a class of chemical structure.

Preventive flame protection, including the use of flame retardants, has been practiced since ancient times. For example, alum was used by ancient Egyptians to reduce flammability. The advent of synthetic polymers in the twentieth century created a need for new flame retardants, since the water soluble inorganic salts previously used were of little or no utility in largely hydrophobic materials. Modem development efforts have thus largely concentrated on the development of polymer compatible flame retardants.

Fundamentally, four processes are involved in polymer flammability: preheating, decomposition, ignition and combustion, and propagation. Flame retardants interfere with combustion during a particular stage of this process, i.e. during heating, decomposition, ignition, or flame spread through physical or chemical actions.

There are several ways in which the combustion process can be retarded by physical action: for example cooling, formation of a protective layer/coating, and/or dilution. During cooling action, endothermic processes triggered by flame retardants may cool the material to a temperature below that required to sustain the combustion process. By formation of a protective layer/coating, a condensed combustible layer may be shielded from the gaseous phase with a solid or gaseous protective layer. A condensed phase is thus cooled, smaller quantities of pyrolysis gases evolve, the oxygen necessary for the combustion process is excluded, and heat transfer is impeded. By dilution, the incorporation of inert substances (e.g., fillers) and additives that evolve inert gases upon decomposition may dilute the fuel in the solid and gaseous phases so that the lower ignition limit of the gas mixture is not exceeded.

Flame retardants can also impede combustion by providing chemical reactions that interfere with combustion processes occurring in the solid and/or gas phases. For reactions in the gas phase, a free radical mechanism of a combustion process that takes place in the gas phase is interrupted by a flame retardant. Exothermic processes may thus be stopped, the system cools down, and the supply of flammable gases is reduced and eventually completely suppressed. For reactions in the solid phase, two types of reaction can take place. First, breakdown of a polymer can be accelerated by a flame retardant, causing pronounced flow of a polymer and, hence, its withdrawal from the sphere of influence of the flame, which breaks away. Second, a flame retardant can cause a layer of carbon to form on a polymer surface. This can occur, for example, through the dehydrating action of the flame retardant generating double bonds in the polymer. These can in turn form a carbonaceous layer by cyclizing and crosslinking.

Brominated flame retardants, such as polybrominated diphenylethers (PBDEs), were first introduced into the consumer marketplace in the 1970s. They showed great compatibility with plastics and textiles and offered superior flame retardant properties. Brominated flame retardants interrupt combustion by volatizing bromine radicals to react with high energetic free radicals O. and ·OH from combustion, thereby preventing the spread of the flame. The most commonly used brominated flame retardants are PBDEs and tetrabromobisphenol A (TBBPA).

Great efforts are being put into developing halogen free flame retardants, especially phosphorus based flame retardants.

Other flame retardants for polyamide polymers have been developed but display similar drawbacks. Melamine cyanurate (MCA) is used as an efficient and cost-effective flame retardant for PA6 and PA66, especially in non-filled polymers. However, MCA exhibits strong hydrogen bonding and has a strong tendency to congregate. Therefore, its flame retarding performance is not stable. Many research efforts have been carried out to stabilize MCA dispersion in polymers, but, to date, these have met with little success.

Meanwhile, aluminum diethylphosphinate (ADP) is often used in glass fiber reinforced polyamides. ADP is usually used in combination with melamine polyphosphate (MPP) in general purpose applications. However, MPP migration often leads to deposition on the surface of injection machines, leading to downtime for cleaning and shortening the usable lifetimes of the machines and parts thereof. In some applications, ADP is used in combination with aluminum phosphinate (AP) with the goal of reducing the migration of flame retardants out of polymer compositions. However, under stringent double 85 conditions (85% humanity and 85 ° C), ADP plus AP formulation are typically only stable up to 4 or 5 days, which is far short of the 3000 hours stability requirement expected for general purpose applications.

It would be desirable to develop a flame retardant for use with polyamide compositions that maintained an even dispersal in the polyamide compositions without either congregating or migrating out of the polyamides. The present invention addresses these needs.

### SUMMARY

In one aspect, the present disclosure provides a flame retardant or flame resistant material comprising a base material that can be selected from the class of polyamides or nylons, a non-halogenated flame retardant component, and an ionic liquid flame retardant component, wherein the ionic liquid flame retardant component comprises a compound having formula (I): 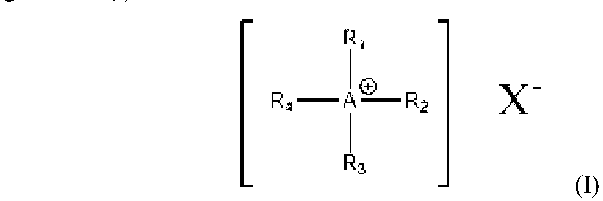 wherein A is P and
each of R₁, R₂, R₃ and R₄ is independently selected from the group consisting of (C₁-C₂₀)alkyl, aryl, (C₃-C₁₀)heterocyclyl, (C₃-C₁₀)cycloalkyl, (C₃-C₁₀)heterocyclyl(C₁-C₈) alkyl, aryl(C₁-C₈)alkyl, heteroaryl and heteroaryl(C₁-C₈)alkyl that may be unsubstituted or substituted by halogen, nitro, trifluoromethyl, trifluoromethoxy, methoxy, carboxy, -NH₂, -OH, -SH, -NHCH₃, -N(CH₃)₂, cyano, - SMe, and -SO₃H,
X⁻ is selected from the group consisting of halide, [B(R)₄]⁻, OH⁻, SCN⁻, RPO₄⁻, (RO)₂P(=O)O⁻, RSO₄⁻, RSO₃⁻; ROSO₃⁻, [N(CN)₂]⁻, [RCOO]⁻, [NO₃] ⁻, [PF₆]⁻, [BF₄]⁻, (RSO₂)₂N⁻, oxalate, dicarboxylate and tricarboxylate, formate, phosphate, and aluminate, wherein each R is independently selected from the group consisting of (C₁-C₂₀)alkyl, aryl, (C₃-C₁₀)heterocyclyl, (C₃-C₁₀)cycloalkyl, (C₃-C₁₀)heterocyclyl(C₁-C₈)alkyl, aryl(C₁-C₈)alkyl, heteroaryl and heteroaryl(C₁-C₈)alkyl group that may be unsubstituted or substituted by halogen, nitro, methoxy, carboxy, -NH₂, -OH, -SH, -NHCH₃, -N(CH₃)₂, -SMe and cyano.
In another aspect, the disclosed flame resistant or flame retardant materials can include additional flame retardant materials including, but not limited to, a mineral flame retardant, a phosphorus based flame retardant, a nitrogen based flame retardant, a silicon based flame retardant, a nanoparticle flame retardant, or any combination thereof In a still further aspect, the flame resistant or flame retardant materials maintain good mechanical properties and processability. In yet another aspect, the disclosed flame resistant or flame retardant materials can include a filler such as, for example, glass fiber. In a still further aspect, the disclosed ionic liquid (IL) flame retardants do not migrate out of the nylon or polyamide base material over time. Also disclosed are articles including the disclosed flame retardant materials.

### DETAILED DESCRIPTION

In one aspect, ionic liquids have superior solvating power towards different materials. As disclosed herein when ionic liquid (IL) is used in combination with MCA, a small percentage of IL can stabilize MCA dispersion in polymers. In a further aspect, as a result, the flame retarding performance can be very stable. In an additional aspect, the mechanical properties of the polymer can also be maintained or even improved.

In one aspect, and without wishing to be bound by theory, the ionic nature of IL can introduce strong intra-molecular forces between IL molecules and polymer chains when the IL is dispersed in polymer. In a further aspect, as a result, the migration pathway between polymer chains is blocked. Thus, in still another aspect, when IL is used in combination with ADP/MPP or ADP/AP, the leaching resistance of the flame retardants can be much improved while maintaining or improving mechanical characteristics of the polymer.

In one aspect of the flame retardant material, the material can be selected from the group consisting of, resin, or plastic products.. In another aspect of the above, the flame retardant composition further includes an additive selected from the group consisting of softening agent, stain repellant agents and combinations thereof.. The vertical flame resistance, as determined by this test method, relates to a specified flame exposure and application time.

In one variation there is provided a method of imparting a flame retarding property to a material including admixing said material with an effective flame retarding amount of the composition of the polyamide formulas in combination with a metal hydroxide, hydroxyl carbonate, borates the like.

In another variation there is provided a method of imparting a flame retarding property to a material including admixing said material with an effective flame retarding amount of the composition of the polyamide formulas combined with an organic flame retardant. In another variation, there is provided a method of imparting a flame retarding property to a material including admixing said material with an effective flame retarding amount of the composition of the polyamide formulas combined with a halogenated flame retardant. In another variation there is provided a method of imparting a flame retarding property to a material including admixing said material with an effective flame retarding amount of the composition of the polyamide formulas combined with halogenated flame retardant additives, halogenated monomers and copolymers which are reactive flame retardants, and the like.

In yet another variation there is provided a method of imparting a flame retarding property to a material including admixing said material with an effective flame retarding amount of the polyamide formulas combined with a phosphorus based flame retardant. In another variation, there is provided a flame retardant composition including admixing an ionic liquid combined with red phosphorus, inorganic phosphorus, organic phosphorus based compounds, intumescent flame retardant systems and the like, with the disclosed polyamide formulas.

In a particular variation, there is provided a method of imparting a flame retarding property to a nylon material including admixing said nylon material with an effective flame retarding amount of the compositions disclosed herein with a nitrogen based flame retardant. In yet another variation, there is provided a method of imparting a flame retarding property to a nylon material including admixing said nylon material with an effective flame retarding amount of the composition of the formulas above combined with silicon based flame retardants. In another variation, there is provided a method of imparting a flame retarding property to a nylon material including treating said nylon material with an effective flame retarding amount of the composition of the formulas above combined with silicones, silica, or the like.

In another variation there is provided a method of imparting a flame retarding property to a nylon material including admixing said material with an effective flame retarding amount of the composition of the disclosed formulas combined with nanoparticles. In a particular variation, there is provided a method of imparting a flame retarding property to a nylon material including admixing said nylon material with an effective flame retarding amount of the compositions disclosed herein combined with a nanoclay, carbon nanotubes, nanoscale particulate additives, or the like.

In another variation there is provided a method of imparting a flame retarding property to a nylon material including admixing said nylon material with an effective flame retarding amount of the a disclosed ionic liquid composition also functioning as a dispersant. In another variation there is provided a method of imparting a flame retarding property to a nylon material including admixing said nylon material with an effective flame retarding amount of a disclosed ionic liquid composition also functioning as a plasticizer.

In a variation there is provided a method of imparting a flame retarding property to a nylon material including admixing said nylon material with an effective flame retarding amount of a disclosed ionic liquid composition also functioning as an antibacterial. In another variation there is provided a method of imparting a flame retarding property to a nylon material including admixing said material with an effective flame retarding amount of the a disclosed ionic liquid composition also functioning as a lubricant. In yet another variation there is provided a method of imparting a flame retarding property to a nylon material including admixing said nylon material with an effective flame retarding amount of a disclosed ionic liquid composition that also function as an anti-corrosion agent.

In one aspect, the disclosed ionic liquid flame retardant compositions of the can be derived from biofeedstock such as carbohydrates, amino acids, fatty acids, nucleotides and other organic and inorganic chemicals derived from biofeedstock.

### Ionic Liquids

In one aspect, to replace brominated flame retardants and other chemical compounds that may have toxic bioaccumulative effects; disclosed herein is a different class of materials, namely ionic liquids ("IL"), may be used for the purpose of flame retarding.

Without wishing to be bound by theory, an ionic liquid is a salt in which the ions are poorly coordinated as is well known in the art. At least one ion in the salt has a delocalized charge and one component is organic, which prevents the formation of a stable crystal lattice.

In one aspect, ionic liquids have capabilities to form a wide range of intermolecular interactions that include strong and weak ionic, hydrogen boding, van der Waals, dispersive, pi-pi interactions, and the like. In another aspect, ionic liquids exhibit compatibility with a wide variety of materials including salts, fats, proteins, amino acids, surfactants, oils, inks and plastics, and even DNA. In a further aspect, ionic liquids have been intensively studied for many applications, such as solvents, catalysts, separation, extraction, biomass processing, etc. In a further aspect, ILs have been used as plasticizers, dispersants, and lubricants. In one aspect, when used as plasticizers, they show excellent resistance to migration and leaching; this mitigates one of the most significant issues with current flame retardant compounds.

In an aspect, ionic liquids are compounds that can contain halogen, nitrogen, sulfur, phosphorus or some combinations of these elements, and so the compounds may be used as flame retardants, either though physical action or chemical action to inhibit combustion processes as discussed above. In an aspect functionalization of a ligand or "head," such as by changing the length of a ligand R group, adding a ligand to different positions of a head, and/or adding a halogen to a ligand or head further increases the number of possible ionic liquid flame retardants. In one aspect, the head may be defined as the positively charged core atom or ring of the cation species of the ionic liquid. Ionic liquids are optionally modified to design biodegradable and nontoxic ionic liquids via incorporation of ethereal side chains.

Ionic liquids may optionally be formulated with other ionic liquids, or traditional flame retardants or additives. In a further aspect, these traditional flame retardants can be mineral flame retardants, halogen containing flame retardants, phosphorous based flame retardants, nitrogen based flame retardants, silicon based flame retardants, nanoparticles, and the like. In a further aspect, mineral flame retardants can be metal hydroxides, hydroxycarbonates, borates, and the like; halogen containing flame retardants can be halogen flame retardant additives, reactive halogenated flame retardant monomers or polymers; phosphorous based flame retardants can be red phosphorous, inorganic phosphate, organic phosphorous based compounds, and the like; silicon based flame retardants can be silicon, silica compounds, and the like; and nanoparticles can be nanoclay, carbon nanotubes, nanoscale particulate additives, and the like.

In a further aspect, ionic liquids may also be used as multifunctional additives in the polyamide compositions disclosed herein. For example, an ionic liquid can be used as a lubricant and flame retardant, a plasticizer and flame retardant, a dispersant and flame retardant, an antibacterial agent and flame retardant, or any combination thereof.

### Nylon Polymers

Nylons, also known as polyamides, are synthetic polymers having amide backbones, where the amide backbones link pendant chemical groups with aliphatic or semi-aromatic properties. Nylon polymers are thermoplastic and are usually white or colorless. Their properties can be modified through the use of various additives. Nylons are typically divided into families, with the two most common families being known as nylon-XY and nylon-Z. In one aspect, nylon-XY is derived from diamines having carbon chain length X and dicarboxylic acids having carbon chain length Y. In a further aspect, an example of a nylon-XY is nylon-6,6, derived from hexamethylenediamine and adipic acid. Other examples of nylon-XY polymers include nylon-6,12 and nylon-4,6. In another aspect, nylon-Z is derived from aminocarboxylic acids having carbon chain length Z. In one aspect, nylon-6 is an example of a nylon-Z polymer and can be derived from a ring-opening polymerization of caprolactam. Other examples of nylon-Z polymers include nylon 11 and nylon 12.

In one aspect, nylon polymers can have various fillers including, but not limited to, glass fibers. In a further aspect, glass fibers are typically incorporated at from about 10 wt% to about 40 wt% of a nylon composition. In a further aspect, a blend of nylon with about 30 wt% glass fibers may be particularly useful for extrusion based processes. In some aspects, adding glass fibers to nylon can increase strength and durability, but may also lead to rigidity. In another aspect, the addition of glass fibers reduces the coefficient of thermal expansion for nylon, making it less prone to shape changes with temperature variation. In still another aspect, the addition of glass fibers can increase impact resistance, chemical resistance, and moldability of nylon compositions. In one aspect, both unfilled and glass-filled nylon can be good electrical insulators.

In some aspects, depending on the application, it may be desired not to include a glass filler in nylon. In one aspect, glass can increase cost, weight, and abrasiveness of nylon compositions. In another aspect, glass-filled nylon may exhibit anisotropic behavior, which may or may not be desirable depending on a given application. In some aspects, glass-filled nylon can be brittle. Thus, in an aspect, the ordinarily-skilled artisan can select whether to use a glass filler in a given nylon composition based on the desired end use of articles made from that composition.

In any of these aspects, the disclosed nylon compositions containing ionic liquid flame retardants can be 3D printed, injection molded, CNC machined, extruded, or processed by any other means by which thermoplastic polymers are typically processed.

In another aspect, the disclosed nylon compositions can be used in various applications for which flame-retardant nylons are required including, but not limited to, automotive parts, electronics, consumer goods (e.g. appliances, kitchen utensils), and the like. In some aspects, the disclosed nylon compositions can be used in textile applications including, but not limited to, clothing, airbags, parachutes, nets, ropes, tents, conveyor belts, and the like.

Provided are flame resistant or flame retardant materials and methods for improving flame resistant properties of nylon materials or imparting flame resistant properties to nylon materials. The present disclosure provides flame resistant composition including a polyamide polymer and an ionic liquid compound, wherein the ionic liquid compound improves the flame resistant or flame retardant properties of the polyamide polymers while retaining superior processability in existing equipment and good mechanical properties. The present disclosure also provides a method of preparing a polymeric composition with improved flame resistance by mixing an ionic liquid compound with a polyamide polymer to obtain the flame resistant or flame retardant materials.

For convenience, before further description of the present invention, certain terms used in the specification, examples and appended claims are collected here. These definitions should be read in light of the remainder of the disclosure and understood as by a person of skill in the art. Unless defined otherwise, all technical and scientific terms used herein have the same meaning as commonly understood by a person of ordinary skill in the art. The terms used throughout this specification are defined as follows, unless otherwise limited in specific instances.

The articles "a," "an" and "the" are used to refer to one or to more than one (i.e., to at least one) of the grammatical object of the article.

The term "about" herein is used to indicate that a value includes the inherent variation of error for the device, the method being employed to determine the value, or the variation that exists among the study subjects.

The terms "optional" and "optionally" as used herein mean that the subsequently described event or circumstance may or may not occur, and that the description includes instances where the event or circumstance occurs and instances in which it does not. For example, "optionally substituted aryl" encompasses both "aryl" and "substituted aryl" as defined herein.

The term "alkyl" as used herein refers to a linear or branched saturated hydrocarbon. Examples of alkyl groups include, but are not limited to, methyl, ethyl, propyl such as propan-1-yl, propan-2-yl (*iso*-propyl), butyls such as butan-1-yl, butan-2-yl (*sec*-butyl), 2-methyl-propan-1-yl (*iso*-butyl), 2-methyl-propan-2-yl (*tert*-butyl), pentyls, hexyls, octyls, and decyls. Optionally, an alkyl group has from 1 to 10 carbon atoms, from 1 to 6 carbon atoms, or from 1 to 4 carbon atoms.

The term "aryl" as used herein refers to a monocyclic aromatic hydrocarbon group or a multicyclic group that contains at least one aromatic hydrocarbon ring. In certain embodiments, an aryl group has from 6 to 15 or more, or 6 to 12 or more, or 6 to 10 or more, ring atoms. Examples of aryl groups include, but are not limited to, phenyl, naphthyl, fluorenyl, azulenyl, anthryl, phenanthryl, biphenyl and terphenyl. The aromatic hydrocarbon ring of an aryl group may be attached or fused to one or more saturated, partially unsaturated, or aromatic rings - e.g., dihydronaphthyl, indenyl, indanyl and tetrahydronaphthyl (tetralinyl). An aryl group may optionally be substituted with one or more substituents as described herein.

The term "cycloalkyl" as used herein refers to a saturated or unsaturated monocyclic, bicyclic, other multicyclic, or bridged cyclic hydrocarbon group. A cycloalkyl group can have 3-22, 3-12, or 3-8 ring carbons, referred to herein as (C₃-C₂₂)cycloalkyl, (C₃-C₁₂)cycloalkyl, or (C₃-C₈)cycloalkyl, respectively. A cycloalkyl group can also have one or more carbon-carbon double bond or carbon-carbon triple bond.

The term "heterocyclyl", "heterocycle" or "heterocyclic" refers to cyclic groups containing at least one heteroatom as a ring atom. In some embodiments, the heterocyclyl, heterocycle or heterocyclic group includes 1 to 3 heteroatoms as ring atoms, with the remainder of the ring atoms being carbon atoms. Examples of heteroatoms include oxygen, sulfur, and nitrogen. In some embodiments, the heterocycle may be 3- to 10-membered ring structures or 3- to 7-membered rings, whose ring structures include one to four heteroatoms. The "heterocyclyl", "heterocycle" or "heterocyclic" may be a single saturated or partially unsaturated non-aromatic ring or a non-aromatic multiple ring system. Examples of heterocycles include, but are not limited to, azetidine, aziridine, imidazolidine, morpholine, oxirane (epoxide), oxetane, piperazine, piperidine, pyrazolidine, piperidine, pyrrolidine, pyrrolidinone, tetrahydrofuran, tetrahydrothiophene, dihydropyridine, tetrahydropyridine, tetrahydro-2H-thiopyran 1,1-dioxide, quinuclidine, N-bromopyrrolidine, and *N-*chloropiperidine.

The term "heteroaryl" as used herein refers to a mono-, bi-, or multi-cyclic aromatic ring system containing one or more heteroatoms, for example 1-3 heteroatoms, such as nitrogen, oxygen, and sulfur. Heteroaryls can also be fused to non-aromatic rings. In various embodiments, the term "heteroaryl" as used herein represents a stable 5- to 7-membered monocyclic, stable 9- to 10-membered fused bicyclic, or stable 12- to 14-membered fused tricyclic heterocyclic ring system which contains an aromatic ring that contains at least one heteroatom selected from the group consisting of N, O, and S. In some embodiments, at least one nitrogen is in the aromatic ring. Examples of heteroaryl groups include, but are not limited to, acridine, benzoimidazole, benzothiophene, benzofuran, benzoxazole, benzothiazole, carbazole, carboline, cinnoline, furan, imidazole, imidazopyridine, indazole, indole, indoline, indolizine, isobenzofuran, isochromene, isoindole, isoindoline, isoquinoline, isothiazole, isoxazole, naphthyridine, oxadiazole, oxazole, perimidine, phenanthridine, phenanthroline, phenazine, phthalazine, pteridine, purine, pyran, pyrazine, pyrazole, pyridazine, pyridine, pyridone, pyrimidine, pyrrole, pyrrolizine, quinazoline, quinoline, quinolizine, quinoxaline, tetrazole, thiadiazole, thiazole, thiophene, triazole, and xanthene.

All numerical ranges herein include all numerical values and ranges of all numerical values within the recited range of numerical values. As a non-limiting example, (C₁-C₆) alkyls also include any one of C₁, C₂, C₃, C₄, C₅, C₆, (C₁-C₂), (C₁-C₃), (C₁-C₄), (C₁-C₅), (C₂-C₃), (C₂-C₄), (C₂-C₅), (C₂-C₆), (C₃ -C₄), (C₃-C₅), (C₃-C₆), (C₄-C₅), (C₄-C₆), and (C₅-C₆) alkyls.

The terms "halo", "halide" and "halogen" as used herein refer to an atom selected from fluorine, chlorine, bromine, and iodine.

The term "thermoplastic" as used herein refers to polymers that become plastic or pliable on heating and harden or solidify on cooling, and are able to repeat this process. In some aspects, thermoplastic materials can have a high molecular weight with polymer chains associating by intermolecular forces that can weaken with increased temperature. In one aspect, thermoplastics can be shaped or reshaped and molded. Meanwhile, the term "thermosetting" refers to polymers that form irreversible chemical bonds during curing. In one aspect, thermosetting polymers that have been cured will decompose rather than melt during heating, and do not reform when cooled. In one aspect, the polymeric compositions described herein are not thermosetting and do not contain thermosetting polymers. In a further aspect, some categories of polymers such as, for example, polyurethanes, may contain both thermosetting and thermoplastic members.

The term "recycled" as used herein refers to a polymeric material or plastic that has been reprocessed into a new product. A recycled polymer or plastic can be waste material from an initial processing step, or can be post-consumer or post-industrial use material. In one aspect, the polymers and polymeric compositions useful herein can be recycled. In another aspect, "mechanical recycling" of plastics and/or polymers occurs when the plastics and/or polymers are remelted and reformed. In some aspects, mechanical recycling can further include regrinding the plastic either before or after remelting. In some aspects, mechanical recycling can cause polymer degradation, which may result in reduced performance during processing such as, for example, undesirable changes to melt flow rate, when compared to virgin polymers. In another aspect, thermoplastic materials exposed to thermal and/or mechanical stresses can become weak and brittle and/or otherwise subject to degradation. In one aspect, the polymers, polymeric compositions, and thermoplastic materials useful herein can be recycled materials or blends of recycled and virgin materials.

In one aspect, disclosed herein is a flame retardant or flame resistant material including a base material, a non-halogenated flame retardant component, and an ionic liquid flame retardant component, wherein the ionic liquid flame retardant component comprises a compound having formula (I): 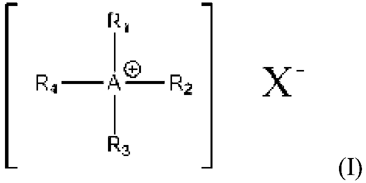 wherein A is P and
each of R₁, R₂, R₃ and R₄ is independently selected from the group consisting of (C₁-C₂₀)alkyl, aryl, (C₃-C₁₀)heterocyclyl, (C₃-C₁₀)cycloalkyl, (C₃-C₁₀)heterocyclyl(C₁-C₈) alkyl, aryl(C₁-C₈)alkyl, heteroaryl and heteroaryl(C₁-C₈)alkyl that may be unsubstituted or substituted by halogen, nitro, trifluoromethyl, trifluoromethoxy, methoxy, carboxy, -NH₂, -OH, -SH, -NHCH₃, -N(CH₃)₂, cyano, - SMe, and -SO₃H,
X⁻ is selected from the group consisting of halide, [B(R)₄]⁻, OH⁻, SCN⁻, RPO₄⁻, (RO)₂P(=O)O⁻, RSO₄⁻, RSO₃⁻; ROSO₃⁻, [N(CN)₂]⁻, [RCOO]⁻, [NO₃] ⁻, [PF₆]⁻, [BF₄]⁻, (RSO₂)₂N⁻, oxalate, dicarboxylate and tricarboxylate, formate, phosphate, and aluminate, wherein each R is independently selected from the group consisting of (C₁-C₂₀)alkyl, aryl, (C₃-C₁₀)heterocyclyl, (C₃-C₁₀)cycloalkyl, (C₃-C₁₀)heterocyclyl(C₁-C₈)alkyl, aryl(C₁-C₈)alkyl, heteroaryl and heteroaryl(C₁-C₈)alkyl group that may be unsubstituted or substituted by halogen, nitro, methoxy, carboxy, -NH₂, -OH, -SH, -NHCH₃, -N(CH₃)₂, -SMe and cyano; and
In one aspect, X⁻ can be selected from the group consisting of halide, [B(R)₄]⁻, OH⁻, SCN⁻, RPO₄⁻, (RO)₂P(=O)O⁻, RSO₄⁻, RSO₃⁻, ROSO₃⁻, [N(CN)₂]⁻, [RCOO]⁻, [NO₃] ⁻, [PF₆]⁻, [BF₄]⁻, (RSO₂)₂N⁻, oxalate, dicarboxylate and tricarboxylate, formate, phosphate, and aluminate, wherein each R is independently selected from the group consisting of (C₁-C₂₀)alkyl, aryl, (C₃-C₁₀)heterocyclyl, (C₃-C₁₀)cycloalkyl, (C₃-C₁₀)heterocyclyl(C₁-C₈)alkyl, aryl(C₁-C₈)alkyl, heteroaryl and heteroaryl(C₁-C₈)alkyl group that may be unsubstituted or substituted by halogen, nitro, methoxy, carboxy, -NH₂, - OH, -SH, -NHCH₃, -N(CH₃)₂, -SMe and cyano.

In another aspect, each of R₁, R₂, R₃ or R₄ is independently selected from the group consisting of (C₁-C₂₀)alkyl, aryl, and aryl(C₁-C₈)alkyl; X⁻ is selected from the group consisting of (CN)₂N⁻, RCOO⁻, halide, OH⁻, SH⁻, CN⁻, [PF₆]⁻, [BF₄]⁻, RSO₃⁻, RSO₃⁻, RSO₃⁻, ROSO₃⁻, (RO)₂P(=O)O⁻, and (RSO₂)₂N⁻, wherein R is selected from the group consisting of (C₁-C₂₀)alkyl, aryl, and aryl(C₁-C₈)alkyl optionally substituted by halogen.

In one aspect, the base material can be a polyamide polymer. In a further aspect, the polyamide polymer can be a nylon-XY polymer or a nylon-Z polymer. In one aspect, the nylon-XY polymer can be nylon-6,6; nylon 6,12; nylon-4,6; or any combination thereof. In another aspect, the nylon-Z polymer can be nylon-6, nylon-11, nylon-12, or any combination thereof.

Optionally, the polyamide can be a natural or a synthetic polyamide. Optionally, the polyamide can be an aliphatic polyamide or an aromatic polyamide, or can include both aromatic and aliphatic segments (i.e., can be a polyphthalamide). When the polyamide includes an aliphatic segment, the aliphatic segment can optionally have from about 1 to about 10 carbon atoms, or can have 1, 2, 3, 4, 5, 6, 7, 8, 9, or 10 carbon atoms, or a combination of any of the foregoing values, or a range encompassing any of the foregoing values. Optionally, the polyamide can be, Nylon 3 (Poly(propiolactam)), Nylon 6 (Poly(caprolactam)), Nylon 8 (Polycapryllactam), Nylon 10 (Poly(decano-10-lactam)), Nylon 11 (Poly(undecano-11-lactam)), Nylon 12 (Poly(dodecano-12-lactam)), Nylon 4,6 (Poly(tetramethylene adipamide)), Nylon 6,6 (Poly(hexamethylene adipamide)), Nylon 6,9 (Poly(hexamethylene azelamide)), Nylon 6,10 (Poly(hexamethylene sebacamide)), Nylon 6,12 (Poly(hexamethylene dodecanediamide)), Nylon 10,10 (Poly(decamethylene sebacamide)), Poly(hexamethylene isophthalamide), Poly(hexamethylene teraphthalamide), Poly(m-phenylene terephthalamide), Poly(nonanmethylene teraphthalamide), para-aramid, or any combination thereof. In an alternative, the thermoplastic polymer can optionally exclude one or more polyamides listed herein.

In one aspect, in the flame resistant or flame retardant material, the base material is present in an amount of from about 80 wt% to about 95 wt% of the flame resistant or flame retardant material.

In one aspect, the non-halogenated flame retardant component can include a mineral flame retardant, a phosphorus based flame retardant, a nitrogen based flame retardant, a silicon based flame retardant, a nanoparticle flame retardant, or any combination thereof. In another aspect, the non-halogenated flame retardant component can be selected from melamine cyanurate (MCA), aluminum diethylphosphinate (ADP), aluminum phosphate (AP), or any combination thereof. In one aspect, the total amount of flame retardant including the non-halogenated flame retardant in combination with the ionic liquid flame retardant can be from about 5 wt% to about 20 wt%, or from about 8 wt% to about 16 wt%, or can be about 5, 6, 7, 8, 9, 10, 11, 12, 13, 14, 15, 16, 17, 18, 19, or about 20 wt% of the flame retardant material. In an aspect, in the flame resistant or flame retardant material, the weight ratio of the non-halogenated flame retardant component to the ionic liquid flame retardant component is from about 21:1 to about 4:1 or is about 21:1, about 17:1, about 15:1, or about 4:1. In one aspect, the ionic liquid flame retardant component can be tributyl(ethyl)phosphonium 4-methylbenzenesulfonate.

In an aspect, the flame resistant or flame retardant material has a UL94 flammability rating of at least V2 or of at least V0. In one aspect, the flame resistant or flame retardant material has a Charpy notched impact strength according to ISO 179 of at least about 5 kJ/m² or greater.

In one aspect, disclosed herein is a filled material including the flame resistant or flame retardant material and a filler. In another aspect, the filler can be glass fiber. In an aspect, the filler is present in an amount of from about 10 wt% to about 40 wt% relative to the amount of flame resistant or flame retardant material. In an aspect, the filler is present in an amount of about 30 wt% relative to the amount of flame resistant or flame retardant material. In one aspect the filled material has a UL94 flammability rating of at least V2 or at least V0. In one aspect, the filled material remains free of bloom for at least 3000 hours at 85 °C and 85% relative humidity.

In one aspect, disclosed herein is a flame resistant or flame retardant material, wherein the base material is nylon-6,6, the non-halogenated flame retardant component is MCA, and the ionic liquid flame retardant component is tributylethylphosphonium 4-methylbenzenesulfonate. In another aspect, disclosed herein is a flame resistant or flame retardant material, wherein the base material is nylon-6, the non-halogenated flame retardant component is MCA, and the ionic liquid flame retardant component is tributylethylphosphonium 4-methylbenzenesulfonate. In an aspect, disclosed herein is a filled material, wherein the base material is nylon-6,6, the non-halogenated flame retardant component is a combination of ADP and AP, and the ionic liquid flame retardant component is tributylethylphosphonium 4-methylbenzenesulfonate. In one aspect, disclosed herein is a filled material, wherein the base material is nylon-6, the non-halogenated flame retardant component is a combination of ADP and AP, and the ionic liquid flame retardant component is tributylethylphosphonium 4-methylbenzenesulfonate.

Also disclosed herein are articles including the disclosed flame resistant or flame retardant material and/or the disclosed filled materials..

Optionally, the nylon polymer is a single polymer and is not a blend of two or more different nylon polymers.

Optionally, the thermoplastic polymer can be a blend of at least one recycled polymer and at least one virgin polymer. Optionally, the at least one recycled polymer and the at least one virgin polymer can be the same or different polymers. When the thermoplastic polymer is a blend of at least one recycled polymer and at least one virgin polymer, the blend can optionally include from about 1% to about 99% recycled polymer and from about 99% to about 1% virgin polymer, or about 1, 5, 10, 15, 20, 25, 30, 35, 40, 45, 50, 55, 60, 65, 70, 75, 80, 85, 90, 95, or about 99% recycled polymer and about 99, 95, 90, 85, 80, 75, 70, 65, 60, 55, 50, 45, 40, 35, 30, 25, 20, 15, 10, 5, or about 1% virgin polymer, or a combination of any of the foregoing values, or a range encompassing any of the foregoing values. In still another aspect, the at least one recycled polymer, the at least one virgin polymer, or both, can be a blend of two or more different thermoplastic polymers as described above. In still another aspect, the thermoplastic polymer is not a blend of recycled and virgin polymers and instead includes 100% of either one or more recycled polymers or one or more virgin polymers.

In another aspect, the present disclosure provides a method of preparing a polymeric composition with improved flame resistance rate including the step of mixing between about 80 wt% and about 95 wt% of a polyamide polymer, optionally between about or about 80, 81, 82, 83, 84, 85, 86, 87, 88, 89, 90, 91, 92, 93, 94, or about 95 wt%, or a combination of any of the foregoing values, or a range encompassing any of the foregoing values, with between about 5 wt% and about 20 wt%, or about 5, 6, 7, 8, 9, 10, 11, 12, 13, 14, 15, 16, 17, 18. 19, or about 20 wt%, or a combination of any of the foregoing values, or a range encompassing any of the foregoing values, of a flame retardant that includes both a non-halogenated flame retardant and a compound having the formula (I). In one aspect, when used herein, "flame retardant" referring to a substance indicates this combined material including both a non-halogenated flame retardant and a compound having the formula (I).

In an aspect, in the flame resistant or flame retardant material, the weight ratio of the non-halogenated flame retardant component to the ionic liquid flame retardant component is from about 21:1 to about 4:1 or is about 21:1, about 17:1, about 15:1, or about 4:1. Thus, in one aspect, in performing the method the non-halogenated flame retardant material (e.g., APP, AP, MCA) and the compound having the formula (I) can be admixed prior to adding to the base material, or can be added separately to the base material, or can be added separately to two different portions of the base material or to two different nylon polymers. In a further aspect, the order of addition is not critical as long as the composition is adequately mixed and the final flame retardant or flame resistant material has the indicated proportions of components.

Optionally, the flame retardant can be added during the step of manufacturing the polyamide polymer. Optionally, when the polyamide polymer is a blend of two or more polyamide polymers, the flame retardant can be added to one polymer or more than one polymer. When the polyamide polymer incorporates a portion of recycled material and a portion of virgin polymer, the flame retardant can optionally be added to the virgin polymer during manufacturing of the virgin polymer.

Optionally, the flame retardant can be added after the thermoplastic polymer has already been manufactured. Further in this aspect, mixing may be required to ensure even dispersal of the flame retardant throughout the polyamide composition.

When the polyamide composition includes a mix of virgin and recycled polymers, the flame retardant can optionally be added to the recycled polymer after or during any recycling processes, and the same or a different flame retardant can be added to the virgin polymer during the step of manufacturing. When the polymeric composition includes a mix of virgin and recycled polymers, the flame retardant can optionally be added to the recycled polymer after any recycling processes, or the flame retardant can be added to the virgin polymer during the step of manufacturing. When the virgin and recycled polymers are mixed, it is expected that the flame retardant will distribute itself throughout the polymeric composition as mixing of the virgin polymer and recycled polymer is conducted.

Optionally, the preparation of the polymeric compositions disclosed herein is achieved by merely mixing the ingredients under conditions suitable for the formation of an intimate mixture. Such conditions include, but are not limited to, solution blending or melt mixing in single or twin-screw type extruders, mixing bowl, roll, kneader, or similar mixing device that can apply a shear to the components. Optionally, a twin-screw extruder is used.

In any of these embodiments, the polymeric composition can entirely exclude additional substances not disclosed, or can include less than about 10%, or less than about 9, 8, 7, 6, 5, 4, 3, 2, 1, 0.5, or 0.25% of additional substances not herein disclosed. In one aspect, the polymeric composition is free of, or substantially free of, any fluorochemical repellents or fluorochemical repellency-imparting additives. Fluorochemical repellency-imparting additives or repellents that may be excluded from the disclosed polymeric compositions include, but are not limited to those that include at least one fluorochemical group, such as, for example, at least one fluoroaliphatic or fluoroalicyclic group. The excluded polymeric and oligomeric fluorochemicals typically include one or more fluorochemical groups that contain a perfluorinated carbon chain having from 3 to about 20 carbon atoms, more preferably from about 4 to about 12 carbon atoms.

In another aspect, the polymeric composition is free of, or substantially free of, impact modifiers including, but not limited to, commercial core-shell impact modifiers, linear or crosslinked copolymers or terpolymers, and the like.

### Properties and Determination of the Same

In one aspect, flammability can be measured by a standard testing method such as, for example, UL94 released by Underwriters Laboratories. In another aspect, UL94 testing can measure both the ability of a plastic part to extinguish or spread a flame after ignition and/or the plastic part's dripping behavior in response to a small open flame or radiant heat source. In one aspect, the UL94 standard can be used to assess minimum thickness at which a plastic sample stops burning when held in a vertical orientation. A V2 sample stops burning in 10 seconds or less with dripping, while a V1 sample stops burning in under 30 seconds with no dripping. Meanwhile, in still another aspect, a V0 sample stops burning in under 10 seconds with no dripping. In one aspect, the plastic compositions tested herein that include a mixture of traditional and ionic liquid flame retardants are rated V0 samples under the UL94 standard.

In another aspect, Charpy impact strength can be measured by a standard testing method such as, for example, ISO 179. In a further aspect, this test can be used to estimate the brittleness or toughness of a specimen under a given set of testing conditions, and can be used to determine comparative data between similar material types. In one aspect, the Charpy impact strength of nylon compositions including a combination of traditional and ionic liquid flame retardants have similar or better Charpy impact strength relative to control samples containing no flame retardant and significantly improved Charpy impact strength relative to control samples containing only traditional flame retardants.

In one aspect, a variety of methods can be used to assess blooming on plastic surfaces. In a further aspect, blooming (also known as efflorescence) can occur when components of plastic compositions migrate to the surface of the material and may be caused when additives are incompatible with the polymer or with other additives or when a plastic material is improperly stored. In an aspect, an acceptable nylon formulation does not exhibit bloom for at least 3000 hours when held at 85 °C and 85% relative humidity.

### ASPECTS

Aspect 1. A flame retardant or flame resistant material comprising a base material, a non-halogenated flame retardant component, and an ionic liquid flame retardant component, wherein the ionic liquid flame retardant component comprises a compound having formula (I): 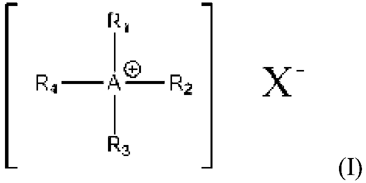 wherein A is P and
   each of R₁, R₂, R₃ and R₄ is independently selected from the group consisting of (C₁-C₂₀)alkyl, aryl, (C₃-C₁₀)heterocyclyl, (C₃-C₁₀)cycloalkyl, (C₃-C₁₀)heterocyclyl(C₁-C₈) alkyl, aryl(C₁-C₈)alkyl, heteroaryl and heteroaryl(C₁-C₈)alkyl that may be unsubstituted or substituted by halogen, nitro, trifluoromethyl, trifluoromethoxy, methoxy, carboxy, -NH₂, -OH, -SH, -NHCH₃, -N(CH₃)₂, cyano, - SMe, and -SO₃H,
   x⁻ is selected from the group consisting of halide, [B(R)₄]⁻, OH⁻, SCN⁻, RPO₄⁻, (RO)₂P(=O)O⁻, RSO₄⁻, RSO₃⁻; ROSO₃⁻, [N(CN)₂]⁻, [RCOO]⁻, [NO₃] ⁻, [PF₆]⁻, [BF₄]⁻, (RSO₂)₂N⁻, oxalate, dicarboxylate and tricarboxylate, formate, phosphate, and aluminate, wherein each R is independently selected from the group consisting of (C₁-C₂₀)alkyl, aryl, (C₃-C₁₀)heterocyclyl, (C₃-C₁₀)cycloalkyl, (C₃-C₁₀)heterocyclyl(C₁-C₈)alkyl, aryl(C₁-C₈)alkyl, heteroaryl and heteroaryl(C₁-C₈)alkyl group that may be unsubstituted or substituted by halogen, nitro, methoxy, carboxy, -NH₂, -OH, -SH, -NHCH₃, -N(CH₃)₂, -SMe and cyano.
Aspect 2. The flame resistant or flame retardant material of aspect 1, wherein X⁻ is selected from the group consisting of halide, [B(R)₄]⁻, OH⁻, SCN⁻, RPO₄⁻, (RO)₂P(=O)O⁻, RSO₄⁻, RSO₃⁻, ROSO₃⁻, [N(CN)₂]⁻, [RCOO]⁻, [NO₃] ⁻, [PF₆]⁻, [BF₄]⁻, (RSO₂)₂N⁻, oxalate, dicarboxylate and tricarboxylate, formate, phosphate, and aluminate, wherein each R is independently selected from the group consisting of (C₁-C₂₀)alkyl, aryl, (C₃-C₁₀)heterocyclyl, (C₃-C₁₀)cycloalkyl, (C₃-C₁₀)heterocyclyl(C₁-C₈)alkyl, aryl(C₁-C₈)alkyl, heteroaryl and heteroaryl(C₁-C₈)alkyl group that may be unsubstituted or substituted by halogen, nitro, methoxy, carboxy, -NH₂, -OH, -SH, -NHCH₃, -N(CH₃)₂, -SMe and cyano.
Aspect 3. The flame resistant or flame retardant material of aspect 1, wherein each of R₁, R₂, R₃ or R₄ is independently selected from the group consisting of (C₁-C₂₀)alkyl, aryl, and aryl(C₁-C₈)alkyl; X⁻ is selected from the group consisting of (CN)₂N⁻, RCOO⁻, halide, OH⁻, SH⁻, CN⁻, [PF₆]⁻, [BF₄]⁻, RSO₃⁻, RSO₃⁻, RSO₃⁻, ROSO₃⁻, (RO)₂P(=O)O⁻, and (RSO₂)₂N⁻, wherein R is selected from the group consisting of (C₁-C₂₀)alkyl, aryl, and aryl(C₁-C₈)alkyl optionally substituted by halogen.
Aspect 4. The flame resistant or flame retardant material of any preceding aspect, wherein the base material comprises a polyamide polymer.
Aspect 5. The flame resistant or flame retardant material of aspect 4, wherein the polyamide polymer comprises a nylon-XY polymer or a nylon-Z polymer.
Aspect 6. The flame resistant or flame retardant material of aspect 5, wherein the nylon-XY polymer comprises nylon-6,6; nylon 6,12; nylon-4,6; or any combination thereof.
Aspect 7. The flame resistant or flame retardant material of aspect 5, wherein the nylon-Z polymer comprises nylon-6, nylon-11, nylon-12, or any combination thereof.
Aspect 8. The flame resistant or flame retardant material of any preceding aspect, wherein the base material is present in an amount of from about 80 wt% to about 95 wt% of the flame resistant or flame retardant material.
Aspect 9. The flame resistant or flame retardant material of any preceding aspect, wherein the non-halogenated flame retardant component comprises a mineral flame retardant, a phosphorus based flame retardant, a nitrogen based flame retardant, a silicon based flame retardant, a nanoparticle flame retardant, or any combination thereof.
Aspect 10. The flame resistant or flame retardant material of aspect 9, wherein the non-halogenated flame retardant component comprises melamine cyanurate (MCA), aluminum diethylphosphinate (ADP), aluminum phosphate (AP), or any combination thereof.
Aspect 11. The flame resistant or flame retardant material of any preceding aspect, wherein the non-halogenated flame retardant component and the ionic liquid flame retardant component are together present in an amount of from about 5 wt% to about 20 wt% of the flame resistant or flame retardant material.
Aspect 12. The flame resistant or flame retardant material of any preceding aspect, wherein the ionic liquid flame retardant component comprises tributyl(ethyl)phosphonium 4-methylbenzenesulfonate.
Aspect 13. The flame resistant or flame retardant material of any preceding aspect, wherein the non-halogenated flame retardant component is present in a ratio relative to the ionic liquid flame retardant component of from about 21:1 to about 4:1
Aspect 14. The flame resistant or flame retardant material of any preceding aspect, wherein the flame resistant or flame retardant material has a UL94 flammability rating of at least V2.
Aspect 15. The flame resistant or flame retardant material of aspect 14, wherein the flame resistant or flame retardant material has a UL94 flammability rating of at least V0.
Aspect 16. The flame resistant or flame retardant material of any preceding aspect, wherein the flame resistant or flame retardant material has a Charpy notched impact strength according to ISO 179 of at least about 5 kJ/m² or greater.
Aspect 17. A filled material comprising the flame resistant or flame retardant material of any preceding aspect and a filler.
Aspect 18. The filled material of aspect 17, wherein the filler comprises glass fiber.
Aspect 19. The filled material of aspect 17 or aspect 18, wherein the filler is present in an amount of from about 10 wt% to about 40 wt% relative to the amount of flame resistant or flame retardant material.
Aspect 20. The filled material of aspect 19, wherein the filler is present in an amount of about 30 wt% relative to the amount of flame resistant or flame retardant material.
Aspect 21. The filled material of any of aspects 17 to 20, wherein the filled material has a UL94 flammability rating of at least V2.
Aspect 22. The filled material of aspect 21, wherein the filled material has a UL94 flammability rating of at least V0.
Aspect 23. The filled material of any of aspects 17 to 22, wherein the filled material remains free of bloom for at least 3000 hours at 85 °C and 85% relative humidity.
Aspect 24. The flame resistant or flame retardant material of any of aspects 1 to 16, wherein the base material comprises nylon-6,6, the non-halogenated flame retardant component comprises MCA, and the ionic liquid flame retardant component comprises tributylethylphosphonium 4-methylbenzenesulfonate.
Aspect 25. The flame resistant or flame retardant material of any of aspects 1 to 16, wherein the base material comprises nylon-6, the non-halogenated flame retardant component comprises MCA, and the ionic liquid flame retardant component comprises tributylethylphosphonium 4-methylbenzenesulfonate.
Aspect 26 The filled material of any of aspects 17 to 23, wherein the base material comprises nylon-6,6, the non-halogenated flame retardant component comprises a combination of ADP and AP, and the ionic liquid flame retardant component comprises tributylethylphosphonium 4-methylbenzenesulfonate.
Aspect 27. The filled material of any of aspects 17 to 23, wherein the base material comprises nylon-6, the non-halogenated flame retardant component comprises a combination of ADP and AP, and the ionic liquid flame retardant component comprises tributylethylphosphonium 4-methylbenzenesulfonate.
Aspect 28. An article comprising the flame resistant or flame retardant material of any of aspects 1 to 16, 25 or 26.
Aspect 29. An article comprising the filled material of any of aspects 17 to 23, 26 or 27.

### EXAMPLES

The disclosure will now be illustrated with working examples, and which is intended to illustrate the working of disclosure and not intended to restrictively any limitations on the scope of the present disclosure. Unless defined otherwise, all technical and scientific terms used herein have the same meaning as commonly understood to one of ordinary skill in the art to which this disclosure belongs. Although methods and materials similar or equivalent to those described herein can be used in the practice of the disclosed methods and compositions, the exemplary methods, devices and materials are described herein.

### Example 1

Tributyl(ethyl)phosphonium 4-methylbenzenesulfonate (CAS Registry No. 119520-10-4) was used as the ionic-liquid based flame retardant in this example. The nylon used was PA66 (EPR27 available from Shenma in Dongguan, China). Amounts of MCA and/or ionic liquid (in wt%) used relative to the polymer wt% are given in Table 1.

Drying was conducted at 100 °C for 4-6 hours. Extrusion temperature was 240-270 °C and injection temperature was 270-280 °C, with a mold temperature of 80 °C. Flame retardant properties and mechanical properties are provided in Table 1.

| **Table 1** | | | | |
|---|---|---|---|---|
| | **Sample Thickness** | **Composition** | | |
| | | **Blank (no flame retardant)** | **8 wt% MCA** | **8% Formula 1^{a}** |
| UL Rating (Method UL94) | 0.4 mm | V2 | V2 | V0 |
| Charpy notched impact strength (Method ISO 179) | | 5.6 kJ/m² | 3.5 kJ/m² | 5.2 kJ/m² |
| ^{a} Formula 1 = 93.75% MCA, 6.25% tributyl(ethyl)phosphonium 4-methylbenzenesulfonate | | | | |

### Example 2

Tributyl(ethyl)phosphonium 4-methylbenzenesulfonate (CAS Registry No. 119520-10-4) was used as the ionic-liquid based flame retardant in this example. The nylon used was PA6 (PA6-J2700 available from Hangzhou Juheshun New Material Co., Ltd., Hangzhou, China). Amounts of MCA and/or ionic liquid (in wt%) used relative to the polymer wt% are given in Table 2.

Drying was conducted at 100 °C for 4-6 hours. Extrusion temperature was 220-240 °C and injection temperature was 240-260 °C, with a mold temperature of 70-80 °C. Flame retardant properties and mechanical properties are provided in Table 2.

| **Table 2** | | | | |
|---|---|---|---|---|
| | **Sample Thickness** | **Composition** | | |
| | | **Blank (no flame retardant)** | **11 wt% MCA** | **11% Formula 2^{b}** |
| UL Rating (Method UL94) | 0.4 mm | V2 | V2 | V0 |
| Charpy notched impact strength (Method ISO 179) | | 7.2 kJ/m² | 4.5 kJ/m² | 5.8 kJ/m² |
| b Formula 2 = 95.45% MCA, 4.55% tributyl(ethyl)phosphonium 4-methylbenzenesulfonate | | | | |

### Example 3

Tributyl(ethyl)phosphonium 4-methylbenzenesulfonate (CAS Registry No. 119520-10-4) was used as the ionic-liquid based flame retardant in this example. The nylon used was PA66 (EPR27 available from Shenma in Dongguan, China). Amounts of ADP, AP, and/or ionic liquid (in wt%) used relative to the polymer wt% are given in Table 3. 30 wt% glass fiber (Megalith EDR14-2000-988A available from Evergreen Chemicals Co., Changzhou, China) was used as filler.

Drying was conducted at 90 °C for 4-6 hours. Extrusion temperature was 240-285 °C and injection temperature was 270-285 °C, with a mold temperature of 80-100 °C. Flame retardant properties and leaching properties are provided in Table 3.

| **Table 3** | | | | |
|---|---|---|---|---|
| | **Sample Thickness** | **Composition** | | |
| | | **Blank (no flame retardant)** | **17 wt% ADP + AP^{c}** | **14% Formula 3^{d}** |
| UL Rating (Method UL94) | 0.6 mm | V2 | V0 | V0 |
| Blooming free hours at 85 °C and 85% relative humidity | | N/A | < 120 | > 3000 |
| ^{x} 77.78 wt% ADP, 22.24 wt% AP | | | | |
| ^{d} Formula 3 =77.78 wt% ADP, 16.67 wt% AP, 5.56 wt% tributyl(ethyl)phosphonium 4-methylbenzenesulfonate | | | | |

### Example 4

Tributyl(ethyl)phosphonium 4-methylbenzenesulfonate (CAS Registry No. 119520-10-4) was used as the ionic-liquid based flame retardant in this example. The nylon used was PA6 (PA6-J2700 available from Hangzhou Juheshun New Material Co., Ltd., Hangzhou, China). Amounts of ADP, AP, and/or ionic liquid (in wt%) used relative to the polymer wt% are given in Table 4. 30 wt% glass fiber (Megalith EDR14-2000-988A available from Evergreen Chemicals Co., Changzhou, China) was used as filler.

Drying was conducted at 90 °C for 4-6 hours. Extrusion temperature was 220-250 °C and injection temperature was 230-250 °C, with a mold temperature of 80 °C. Flame retardant properties and leaching properties are provided in Table 4.

| **Table 4** | | | | |
|---|---|---|---|---|
| | **Sample Thickness** | **Composition** | | |
| | | **Blank (no flame retardant)** | **20 wt% ADP + AP^{e}** | **16% Formula 4^{f}** |
| UL Rating (Method UL94) | 0.6 mm | V2 | V0 | V0 |
| Blooming free hours at 85 °C and 85% relative humidity | | N/A | < 100 | > 3000 |
| ^{e} 80 wt% ADP, 20 wt% AP | | | | |
| ^{f} Formula 4 = 80 wt% ADP, 15 wt% AP, 5 wt% tributyl(ethyl)phosphonium 4-methylbenzenesulfonate | | | | |

### Example 5

Some experiments were conducted using MPP as flame retardant (data not shown). However, migration of MPP is worse than for AP and/or ADP. Although ionic liquids as disclosed herein can significantly improve migration resistance, these compositions did not meet the 3000 hour blooming free requirements at 85 °C and 85% relative humidity

## Claims

1. A flame retardant or flame resistant material comprising a base material, a non-halogenated flame retardant component, and an ionic liquid flame retardant component, wherein the ionic liquid flame retardant component comprises a compound having formula (I): 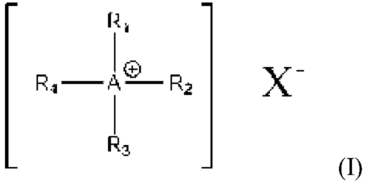 wherein A is P and
each of R₁, R₂, R₃ and R₄ is independently selected from the group consisting of (C₁-C₂₀)alkyl, aryl, (C₃-C₁₀)heterocyclyl, (C₃-C₁₀)cycloalkyl, (C₃-C₁₀)heterocyclyl(C₁-C₈) alkyl, aryl(C₁-C₈)alkyl, heteroaryl and heteroaryl(C₁-C₈)alkyl that may be unsubstituted or substituted by halogen, nitro, trifluoromethyl, trifluoromethoxy, methoxy, carboxy, -NH₂, -OH, -SH, -NHCH₃, -N(CH₃)₂, cyano, - SMe, and -SO₃H,
X⁻ is selected from the group consisting of halide, [B(R)₄]⁻, OH⁻, SCN⁻, RPO₄⁻, (RO)₂P(=O)O⁻, RSO₄⁻, RSO₃⁻; ROSO₃⁻, [N(CN)₂]⁻, [RCOO]⁻, [NO₃] ⁻, [PF₆]⁻, [BF₄]⁻, (RSO₂)₂N⁻, oxalate, dicarboxylate and tricarboxylate, formate, phosphate, and aluminate, wherein each R is independently selected from the group consisting of (C₁-C₂₀)alkyl, aryl, (C₃-C₁₀)heterocyclyl, (C₃-C₁₀)cycloalkyl, (C₃-C₁₀)heterocyclyl(C₁-C₈)alkyl, aryl(C₁-C₈)alkyl, heteroaryl and heteroaryl(C₁-C₈)alkyl group that may be unsubstituted or substituted by halogen, nitro, methoxy, carboxy, -NH₂, -OH, -SH, -NHCH₃, -N(CH₃)₂, -SMe and cyano.

2. The flame resistant or flame retardant material of claim 1, wherein X⁻ is selected from the group consisting of halide, [B(R)₄]⁻, OH⁻, SCN⁻, RPO₄⁻, (RO)₂P(=O)O⁻, RSO₄⁻, RSO₃⁻, ROSO₃⁻, [N(CN)₂]⁻, [RCOO]⁻, [NO₃] ⁻, [PF₆]⁻, [BF₄]⁻, (RSO₂)₂N⁻, oxalate, dicarboxylate and tricarboxylate, formate, phosphate, and aluminate, wherein each R is independently selected from the group consisting of (C₁-C₂₀)alkyl, aryl, (C₃-C₁₀)heterocyclyl, (C₃-C₁₀)cycloalkyl, (C₃-C₁₀)heterocyclyl(C₁-C₈)alkyl, aryl(C₁-C₈)alkyl, heteroaryl and heteroaryl(C₁-C₈)alkyl group that may be unsubstituted or substituted by halogen, nitro, methoxy, carboxy, -NH₂, - OH, -SH, -NHCH₃, -N(CH₃)₂, -SMe and cyano.

3. The flame resistant or flame retardant material of claim 1 or claim 2, wherein each of R₁, R₂, R₃ or R₄ is independently selected from the group consisting of (C₁-C₂₀)alkyl, aryl, and aryl(C₁-C₈)alkyl; X⁻ is selected from the group consisting of (CN)₂N⁻, RCOO⁻, halide, OH⁻, SH⁻, CN⁻, [PF₆]⁻, [BF₄]⁻, RSO₃⁻, RSO₃⁻, RSO₃⁻, ROSO₃⁻, (RO)₂P(=O)O⁻, and (RSO₂)₂N⁻, wherein R is selected from the group consisting of (C₁-C₂₀)alkyl, aryl, and aryl(C₁-C₈)alkyl optionally substituted by halogen.

4. The flame resistant or flame retardant material of any preceding claim, wherein the base material comprises a nylon-XY polymer, a nylon-Z polymer, or any combination thereof.

5. The flame resistant or flame retardant material of claim 4, wherein the nylon-XY polymer comprises nylon-6,6; nylon 6,12; nylon-4,6; or any combination thereof, and/or wherein the nylon-Z polymer comprises nylon-6, nylon-11, nylon-12, or any combination thereof.

6. The flame resistant or flame retardant material of any preceding claim, wherein the base material is present in an amount of from about 80 wt% to about 95 wt% of the flame resistant or flame retardant material.

7. The flame resistant or flame retardant material of any preceding claim, wherein the non-halogenated flame retardant component comprises a mineral flame retardant, a phosphorus based flame retardant, a nitrogen based flame retardant, a silicon based flame retardant, a nanoparticle flame retardant, or any combination thereof.

8. The flame resistant or flame retardant material of any preceding claim, wherein the non-halogenated flame retardant and the ionic liquid flame retardant component are together present in an amount of from about 5 wt% to about 20 wt% of the flame resistant or flame retardant material, and/or wherein the non-halogenated flame retardant component is present in a ratio relative to the ionic liquid flame retardant component of from about 21:1 to about 4:1.

9. The flame resistant or flame retardant material of any preceding claim, wherein the flame resistant or flame retardant material has a UL94 flammability rating of at least V2, and/or has a Charpy notched impact strength according to ISO 179 of at least about 5 kJ/m² or greater.

10. The flame resistant or flame retardant material of any preceding claim, wherein the base material comprises nylon-6,6 or nylon-6, the non-halogenated flame retardant component comprises melamine cyanurate (MCA), and the ionic liquid flame retardant component comprises tributylethylphosphonium 4-methylbenzenesulfonate.

11. A filled material comprising the flame resistant or flame retardant material of any preceding claim and a filler comprising glass fiber.

12. The filled material of claim 11, wherein the filler is present in an amount of from about 10 wt% to about 40 wt% relative to the amount of flame resistant or flame retardant material.

13. The filled material of claim 11 or claim 12, wherein the filled material has a UL94 flammability rating of at least V2, and/or the filled material remains free of bloom for at least 3000 hours at 85 °C and 85% relative humidity.
